# EUROPEAN PATENT APPLICATION

(11) **EP 4 502 081 A1**
(43) Date of publication of application: **05.02.2025**
(21) Application number: 23780194.9
(22) Date of filing: 24.03.2023
(51) Int. Cl.: C08L 101/16, C08F 283/02, C08K 13/04, C08L 51/08, C08L 67/04

(54) **THERMOPLASTIC RESIN COMPOSITION**

(30) Priority: 29.03.2022 JP 2022053573
(71) Applicant: Kaneka Corporation, Osaka-shi, Osaka 530-8288 (JP)
(72) Inventor: SONOYAMA, Arisa, Osaka 566-0072 (JP)
(74) Representative: Vossius & Partner Patentanwälte Rechtsanwälte mbB
(86) International application number: PCT/JP2023/011871
(87) International publication number: WO 2023/190184

(57) **Abstract**

Provided is a thermoplastic resin composition containing: 80 to 99.9 parts by weight of a thermoplastic resin (A); and 0.1 to 20 parts by weight of crosslinked resin particles (B) containing a polyhydroxyalkanoate resin and having a gel fraction of 50% or more. The total amount of the thermoplastic resin (A) and the crosslinked resin particles (B) is 100 parts by weight. The polyhydroxyalkanoate resin may be a poly(3-hydroxyalkanoate) resin. The crosslinked resin particles (B) may have a volume mean diameter of 0.1 to 10 µm. The thermoplastic resin composition can be processed into a molded article.

## Description

### Technical Field

The present invention relates to a thermoplastic resin composition.

### Background Art

In terms of industrial productivity, it is desired for thermoplastic resins to become solidified in a short time after being melted by heating in a molding process.

Known techniques for improving the solidification properties of thermoplastic resins include blending the thermoplastic resins with various additives.

For example, Patent Literature 1 describes accelerating crystallization and solidification of poly(3-hydroxybutyrate-co-3-hydroxyhexanoate), which is a thermoplastic resin, by blending 100 parts by weight of the poly(3-hydroxybutyrate-co-3-hydroxyhexanoate) with 0.1 to 20 parts by weight of a poly(3-hydroxyalkanoate) having a mean particle diameter of 300 µm or less and having a relatively high melting temperature.

### Citation List

### Patent Literature

PTL 1: Japanese Laid-Open Patent Application Publication No. 2004-161802

### Summary of Invention

### Technical Problem

The method described in Patent Literature 1 allows for acceleration of crystallization and solidification of thermoplastic resins. However, the accelerating effect is not necessarily satisfactory, and there is a need for further improvement.

In view of the above circumstances, the present invention aims to provide a thermoplastic resin composition capable of accelerated post-melting solidification.

### Solution to Problem

As a result of intensive studies, the present inventors have found that post-melting solidification of a thermoplastic resin can be accelerated by blending the thermoplastic resin with crosslinked resin particles made with a polyhydroxyalkanoate resin and having a gel fraction in a given range, and have completed the present invention.

Specifically, the present invention relates to a thermoplastic resin composition containing: 80 to 99.9 parts by weight of a thermoplastic resin (A); and 0.1 to 20 parts by weight of crosslinked resin particles (B) containing a polyhydroxyalkanoate resin and having a gel fraction of 50% or more, wherein a total amount of the thermoplastic resin (A) and the crosslinked resin particles (B) is 100 parts by weight.

The present invention also relates to a molded article containing the thermoplastic resin composition.

The present invention further relates to a solidification accelerator for thermoplastic resins, the solidification accelerator containing crosslinked resin particles (B) containing a polyhydroxyalkanoate resin and having a gel fraction of 50% or more.

### Advantageous Effects of Invention

The present invention can provide a thermoplastic resin composition capable of accelerated post-melting solidification.

The thermoplastic resin composition according to the present invention contains crosslinked resin particles made with a polyhydroxyalkanoate resin and is thus advantageous in terms of biodegradability.

The crosslinked resin particles can be used as a solidification accelerator for thermoplastic resins.

### Description of Embodiments

Hereinafter, an embodiment of the present invention will be described. The present invention is not limited to the embodiment described below.

A thermoplastic resin composition according to the present embodiment contains at least a thermoplastic resin (A) and crosslinked resin particles (B) containing a polyhydroxyalkanoate resin and having a gel fraction of 50% or more. The thermoplastic resin composition can, after melting, undergo solidification at a relatively high temperature and start to become solidified early. Thus, the thermoplastic resin composition can be melt-processed at high productivity.

The crosslinked resin particles (B) will be described first.

### <Crosslinked Resin Particles (B)>

The crosslinked resin particles (B) are particles made using a polyhydroxyalkanoate resin as a main resin component. The polyhydroxyalkanoate resin may be hereinafter abbreviated as "PHA".

### <PHA>

The "PHA" generically refers to a polymer containing a hydroxyalkanoic acid as a monomer unit and is generally biodegradable. The PHA is an aliphatic polyester and preferably a polyester containing no aromatic ring.

Examples of the PHA include, but are not limited to, polyglycolic acid, a poly(3-hydroxyalkanoate) resin, and a poly(4-hydroxyalkanoate) resin. One PHA may be used alone or two or more PHAs may be used in combination. The poly(3-hydroxyalkanoate) resin is preferred. The poly(3-hydroxyalkanoate) resin may be hereinafter abbreviated as "P3HA".

The P3HA is a polyhydroxyalkanoate containing 3-hydroxyalkanoic acid repeating units represented by [-CHR-CH₂-CO-O-] (wherein R is an alkyl group represented by CₙH₂ₙ₊₁ and n is an integer from 1 to 15) as essential repeating units. The P3HA preferably contains 50 mol% or more, more preferably 70 mol% or more, of the 3-hydroxyalkanoic acid repeating units in total monomer repeating units (100 mol%).

Examples of the P3HA include, but are not limited to, poly(3-hydroxybutyrate) abbreviated as P3HB and poly(3-hydroxybutyrate-co-3-hydroxyhexanoate) abbreviated as P3HB3HH. One P3HA may be used alone or two or more P3HAs may be used in combination.

The P3HA can be microbially produced. Such a microbially produced P3HA is typically a P3HA consisting only of D- (R-) hydroxyalkanoic acid repeating units. Among microbially produced P3HAs, P3HB and P3HB3HH are preferred since they are easy to industrially produce. P3HB3HH is more preferred.

In the case where the P3HA contains 3-hydroxybutyric acid (3HB) repeating units, it is preferable, in terms of the balance between flexibility and strength, that the proportion of the 3HB repeating units be from 60 to 99 mol%, more preferably from 65 to 97 mol%, and even more preferably from 67 to 95 mol% in total monomer repeating units (100 mol%). When the proportion of the 3HB repeating units is 60 mol% or more, the stiffness of the crosslinked resin particles (B) can be enhanced. When the proportion of the 3HB repeating units is 99 mol% or less, the flexibility of the crosslinked resin particles (B) is likely to be enhanced. The monomer proportions in the P3HA can be measured by a method such as gas chromatography (see WO 2014/020838). Two or more P3HAs differing in the proportion of the 3HB repeating units may be used in combination.

The microorganism for producing the P3HA is not limited to a particular type and may be any microorganism having a P3HA-producing ability. The first example of P3HB-producing bacteria is *Bacillus megaterium* discovered in 1925, and other known examples include naturally occurring microorganisms such as *Cupriavidus necator* (formerly classified as *Alcaligenes eutrophus* or *Ralstonia eutropha*) and *Alcaligenes latus.* These microorganisms accumulate P3HB in their cells.

Known examples of bacteria that produce copolymers of 3HB with other hydroxyalkanoates include *Aeromonas caviae* which is a P3HB3HH-producing bacterium. In particular, in order to increase the P3HB3HH productivity, *Alcaligenes eutrophus* AC32 (FERM BP-6038; see T. Fukui, Y. Doi, J. Bacteriol., 179, pp. 4821-4830 (1997)) incorporating a P3HA synthase gene is preferred. Such a microorganism is cultured under suitable conditions to allow the microorganism to accumulate a P3HA in its cells, and the microbial cells accumulating the P3HA are used. Instead of the above microorganism, a genetically modified microorganism incorporating any suitable P3HA synthesis-related gene may be used depending on the P3HA to be produced. The culture conditions including the type of the substrate may be optimized depending on the P3HA to be produced.

The molecular weight of the PHA is not limited to a particular range. The weight-average molecular weight of the PHA is preferably from 50,000 to 3,000,000, more preferably from 100,000 to 2,000,000, and even more preferably from 150,000 to 1,500,000. When the weight-average molecular weight is 50,000 or more, the crosslinked resin particles can avoid having low strength or can avoid being sticky due to a low-molecular-weight component. The PHA having a weight-average molecular weight of more than 3,000,000 could be difficult to produce or to handle for the purpose of the present invention. The above-mentioned values of the weight-average molecular weight are those measured before a crosslinking process of the PHA.

The weight-average molecular weight can be determined as a polystyrene-equivalent molecular weight measured by gel permeation chromatography (GPC; "High-performance liquid chromatograph 20A system" manufactured by Shimadzu Corporation) using polystyrene gels (such as "K-G 4A" and "K-806M" manufactured by Showa Denko K.K.) as columns and chloroform as a mobile phase. In this chromatography, calibration curves can be created using polystyrenes having weight-average molecular weights of 31,400, 197,000, 668,000, and 1,920,000. The columns used in the GPC may be any columns suitable for measurement of the molecular weight.

### <Gel Fraction>

The crosslinked resin particles (B) have a crosslinked structure formed by PHA molecular chains linked to each another. Since the amount of such a crosslinked structure is above a certain level, the crosslinked resin particles (B) have a high gel fraction, in particular a gel fraction of 50% or more. By virtue of such a high gel fraction, the crosslinked resin particles (B) can accelerate crystallization and solidification of the thermoplastic resin (A).

The gel fraction is preferably 60% or more, more preferably 70% or more, even more preferably 75% or more, and particularly preferably 80% or more. The gel fraction may be 85% or more or 90% or more. The upper limit of the gel fraction is not limited to a particular value, and the gel fraction only needs to be 100% or less. In terms of the efficiency of production of the crosslinked resin particles (B), the gel fraction is preferably 99.5% or less and more preferably 99% or less. The gel fraction may be 98% or less, 97% or less, or 96% or less.

The gel fraction is measured as follows. The crosslinked resin particles (B) having been dried are added to chloroform to give a concentration of 0.7 wt% and dissolved at 60°C for 30 minutes to obtain a chloroform solution. Subsequently, the chloroform solution is allowed to stand at room temperature for 3 hours, after which the chloroform solution is filtered through a membrane filter having a pore diameter of 0.45 µm. The gel remaining on the filter is dried, and the total weight of the dried gel and the filter is measured. The gel fraction is calculated by the following equation. Gel fraction = (weight of filter carrying dried gel - weight of filter alone)/weight of crosslinked resin particles used for measurement × 100 (%)

### <Mean Diameter>

The crosslinked resin particles (B) preferably have a volume mean diameter of 0.1 to 10 µm. When having such a diameter, the crosslinked resin particles (B) can accelerate crystallization and solidification of the thermoplastic resin (A) more efficiently. In terms of practical occasions for use, the volume mean diameter is preferably at least 0.1 µm, more preferably at least 0.3 µm, and even more preferably at least 0.5 µm. In terms of productivity (such as the efficiency of production or crosslinking process of the PHA), the volume mean diameter is preferably up to 8 µm and more preferably up to 5 µm. It should be noted that melting and kneading the crosslinked resin particles (B) with the thermoplastic resin (A) can cause the crosslinked resin particles (B) to lose their original shape, resulting in a reduction in the volume mean diameter of the crosslinked resin particles (B).

The volume mean diameter is measured for the crosslinked resin particles (B) dispersed in an aqueous solvent. The measurement device used can be a commonly-used measurement device, an example of which is Microtrac MT3300 EXII manufactured by Nikkiso Co., Ltd.

### <Peroxide>

The crosslinked resin particles (B) are not limited to a particular way of crosslinking but are preferably those crosslinked using a peroxide. When a peroxide is used, radicals generated by decomposition of the peroxide act on the molecules of the PHA to link the molecular chains of the PHA directly to each other, with the result that the crosslinked structure can be formed.

The peroxide may be an organic peroxide or an inorganic peroxide. To efficiently increase the gel fraction, an organic peroxide is preferred.

In terms of factors such as the heating temperature and the time in the crosslinking process, the organic peroxide used is preferably at least one selected from the group consisting of a diacyl peroxide, an alkyl peroxyester, a dialkyl peroxide, a hydroperoxide, a peroxyketal, a peroxycarbonate, and a peroxydicarbonate.

Specific examples of the organic peroxide include butyl peroxyneododecanoate, octanoyl peroxide, dilauroyl peroxide, succinic peroxide, a mixture of toluoyl peroxide and benzoyl peroxide, benzoyl peroxide, bis(butylperoxy)trimethylcyclohexane, butyl peroxylaurate, dimethyldi(benzoylperoxy)hexane, bis(butylperoxy)methylcyclohexane, bis(butylperoxy)cyclohexane, butyl peroxybenzoate, butyl bis(butylperoxy)valerate, dicumyl peroxide, di-*t*-hexyl peroxide, *t*-butyl peroxy-2-ethylhexanoate, *t*-butyl peroxyisobutyrate, *t*-butyl peroxypivalate, *t*-hexyl peroxypivalate, *t*-butylperoxymethyl monocarbonate, *t*-pentylperoxymethyl monocarbonate, *t*-hexylperoxymethyl monocarbonate, *t*-heptylperoxymethyl monocarbonate, *t*-octylperoxymetliyl monocarbonate, 1,1,3,3-tetramethylbutylperoxymethyl monocarbonate, *t*-butylperoxyethyl monocarbonate, *t*-pentylperoxyethyl monocarbonate, *t*-hexylperoxyethyl monocarbonate, *t*-heptylperoxyethyl monocarbonate, *t*-octylperoxyethyl monocarbonate, 1,1,3,3-tetramethylbutylperoxyethyl monocarbonate, *t*-butylperoxy-*n*-propyl monocarbonate, *t*-pentylperoxy-*n*-propyl monocarbonate, *t*-hexylperoxy-*n*-propyl monocarbonate, *t*-heptylperoxy-n-propyl monocarbonate, *t*-octylperoxy-*n*-propyl monocarbonate, 1,1,3,3-tetramethylbutylperoxy-*n*-propyl monocarbonate, *t*-butylperoxyisopropyl monocarbonate, *t*-pentylperoxyisopropyl monocarbonate, *t*-hexylperoxyisopropyl monocarbonate, *t*-heptylperoxyisopropyl monocarbonate, *t*-octylperoxyisopropyl monocarbonate, 1,1,3,3-tetramethylbutylperoxyisopropyl monocarbonate, *t*-butylperoxy-n-butyl monocarbonate, *t*-pentylperoxy-*n*-butyl monocarbonate, *t*-hexylperoxy-n-butyl monocarbonate, *t*-heptylperoxy-*n*-butyl monocarbonate, *t*-octylperoxy-n-butyl monocarbonate, 1,1,3,3-tetramethylbutylperoxy-*n*-butyl monocarbonate, *t*-butylperoxyisobutyl monocarbonate, *t*-pentylperoxyisobutyl monocarbonate, *t*-hexylperoxyisobutyl monocarbonate, *t*-heptylperoxyisobutyl monocarbonate, *t*-octylperoxyisobutyl monocarbonate, 1,1,3,3-tetramethylbutylperoxyisobutyl monocarbonate, *t*-butylperoxy-sec-butyl monocarbonate, *t*-pentylperoxy-*sec*-butyl monocarbonate, *t*-hexylperoxy-*sec*-butyl monocarbonate, *t*-heptylperoxy-*sec*-butyl monocarbonate, *t*-octylperoxy-*sec*-butyl monocarbonate, 1,1,3,3-tetramethylbutylperoxy-*sec*-butyl monocarbonate, *t*-butylperoxy-*t*-butyl monocarbonate, *t*-pentylperoxy-*t*-butyl monocarbonate, *t*-hexylperoxy-*t*-butyl monocarbonate, *t*-heptylperoxy-*t*-butyl monocarbonate, *t*-octylperoxy-*t*-butyl monocarbonate, 1,1,3,3-tetramethylbutylperoxy-*t*-butyl monocarbonate, *t*-butylperoxy-2-ethylhexyl monocarbonate, *t*-pentylperoxy-2-ethylhexyl monocarbonate, *t*-hexylperoxy- 2-ethylhexyl monocarbonate, *t*-heptylperoxy-2-ethylhexyl monocarbonate, *t*-octylperoxy-2-ethylhexyl monocarbonate, 1,1,3,3-tetramethylbutylperoxy-2-ethylhexyl monocarbonate, diisobutyl peroxide, cumyl peroxyneodecanoate, di-*n*-propyl peroxydicarbonate, diisopropyl peroxydicarbonate, di-*sec*-butyl peroxydicarbonate, 1,1,3,3-tetramethylbutyl peroxyneodecanoate, bis(4-*t*-butylcyclohexyl) peroxydicarbonate, bis(2-ethylhexyl) peroxydicarbonate, *t*-hexyl peroxyneodecanoate, *t*-butyl peroxyneodecanoate, *t*-butyl peroxyneoheptanoate, *t*-hexyl peroxypivalate, *t*-butyl peroxypivalate, di(3,5,5-trimethylhexanoyl) peroxide, dilauroyl peroxide, 1,1,3,3-tetramethylbutyl peroxy-2-ethylhexanoate, disuccinic acid peroxide, 2,5-dimethyl-2,5-bis(2-ethylhexanoylperoxy)hexane, *t*-hexyl peroxy-2-ethylhexanoate, di(4-methylbenzoyl) peroxide, dibenzoyl peroxide, *t*-butylperoxy-2-ethylhexyl carbonate, *t*-butylperoxyisopropyl carbonate, 1,6-bis(*t*-butylperoxycarbonyloxy)hexane, *t*-butyl peroxy-3,5,5-trimethylhexanoate, *t*-butyl peroxyacetate, *t*-butyl peroxybenzoate, *t*-amyl peroxy-3,5,5-trimethylhexanoate, 2,2-bis(4,4-di-*t*-butylperoxycyclohexyl)propane, and 2,2-di-*t*-butylperoxybutane. One organic peroxide may be used alone, or two or more organic peroxides may be used in combination.

Among the organic peroxides as listed above, *t*-butylperoxyisopropyl monocarbonate, *t*-pentylperoxyisopropyl monocarbonate, *t*-hexylperoxyisopropyl monocarbonate, *t*-butylperoxy-2-ethylhexyl monocarbonate, *t*-pentylperoxy-2-ethylhexyl monocarbonate, *t*-hexylperoxy-2-ethylhexyl monocarbonate, *t*-amylperoxyisopropyl monocarbonate, di-*t*-hexyl peroxide, *t*-butyl peroxy-2-ethylhexanoate, *t*-butyl peroxyisobutyrate, *t*-hexyl peroxy-2-ethylhexanoate, 1,1,3,3-tetramethylbutyl peroxy-2-ethylhexanoate, *t*-butyl peroxypivalate, *t*-hexyl peroxypivalate, *t*-butyl peroxyneodecanoate, *t*-hexyl peroxyneodecanoate, and 1,1,3,3-tetramethylbutyl peroxyneodecanoate are preferred since the use of these organic peroxides allows for efficient crosslinking of the PHA.

To set the heating temperature low in the crosslinking process, the peroxide is preferably a compound having a one-hour half-life temperature of 200°C or lower. The one-hour half-life temperature is more preferably 170°C or lower and even more preferably 140°C or lower. The one-hour half-life temperature may be at least 50°C, at least 60°C, or at least 70°C.

Particularly preferred examples of the organic peroxide having such a one-hour half-life temperature include *t*-butylperoxyisopropyl monocarbonate, *t*-butylperoxy-2-ethylhexyl monocarbonate, di-*sec*-butyl peroxydicarbonate, *t*-butyl peroxy-2-ethylhexanoate, *t*-butyl peroxyisobutyrate, *t*-hexyl peroxy-2-ethylhexanoate, 1,1,3,3-tetramethylbutyl peroxy-2-ethylhexanoate, *t*-butyl peroxypivalate, *t*-hexyl peroxypivalate, t-butyl peroxyneodecanoate, *t*-hexyl peroxyneodecanoate, and 1,1,3,3-tetramethylbutyl peroxyneodecanoate.

When the peroxide is an inorganic peroxide, examples of the inorganic peroxide include hydrogen peroxide, potassium peroxide, calcium peroxide, sodium peroxide, magnesium peroxide, potassium persulfate, sodium persulfate, and ammonium persulfate, which are preferred in view of the heating temperature and the time in the crosslinking process. Among these peroxides, hydrogen peroxide, potassium persulfate, sodium persulfate, and ammonium persulfate are preferred since they are easy to handle and have a decomposition temperature suitable for the heating temperature in the crosslinking process. One inorganic peroxide may be used alone, or two or more inorganic peroxides may be used in combination. Alternatively, an organic peroxide and an inorganic peroxide may be used in combination.

### <Polyfunctional Compound>

The crosslinked structure of the crosslinked resin particles (B) may be introduced using only a peroxide or using both a peroxide and a polyfunctional compound. With the use of both a peroxide and a polyfunctional compound, the gel fraction of the crosslinked resin particles (B) can be increased with a reduced amount of the peroxide.

The polyfunctional compound refers to a compound having per molecule two or more functional groups able to crosslink the PHA. The polyfunctional compound is not limited to a particular type but is preferably a compound reactive with radicals generated from the peroxide and particularly preferably a compound having two or more radical-reactive groups per molecule. The radical-reactive groups preferably include at least functional groups selected from the group consisting of vinyl, allyl, acryloyl, and methacryloyl groups.

Examples of the polyfunctional compound include, but are not limited to: allyl (meth)acrylate; allyl alkyl (meth)acrylates; allyloxy alkyl (meth)acrylates; polyfunctional (meth)acrylates having two or more (meth)acrylic groups, such as ethylene glycol di(meth)acrylate, butanediol di(meth)acrylate, triethylene glycol di(meth)acrylate, tetraethylene glycol di(meth)acrylate, polyethylene glycol di(meth)acrylate, trimethylolpropane tri(meth)acrylate, and pentaerythritol (meth)acrylate; divinylbenzene; diallyl phthalate; triallyl cyanurate; triallyl isocyanurate; and divinylbenzene. Preferred are allyl methacrylate, triallyl isocyanurate, butanediol di(meth)acrylate, and divinylbenzene. Particularly preferred are allyl methacrylate and triallyl isocyanurate.

When the crosslinked structure is formed in the presence of a polyfunctional compound, the resulting crosslinked resin particles (B) can usually contain a structure derived from the polyfunctional compound. In this case, the molecular chains of the PHA are linked to each other via the structure derived from the polyfunctional compound.

The crosslinked resin particles (B) may consist only of the PHA having a crosslinked structure or may further contain components other than the PHA having a crosslinked structure. Examples of the components other than the PHA having a crosslinked structure include a resin other than the PHA, an antioxidant, a hydrolysis inhibitor, an anti-blocking agent, a nucleating agent, and an ultraviolet absorber.

The proportion of the PHA in the crosslinked resin particles (B) is not limited to a particular range and may be 50 wt% or more. The proportion of the PHA is preferably 70 wt% or more, more preferably 80 wt% or more, still even more preferably 90 wt% or more, and particularly preferably 95 wt% or more. The proportion of the PHA may be 99 wt% or more. The upper limit of the proportion of the PHA is not limited to a particular value and may be any value of 100 wt% or less.

Examples of the resin other than the PHA include: an aliphatic polyester having a structure resulting from polycondensation of an aliphatic diol and an aliphatic dicarboxylic acid; and an aliphatic-aromatic polyester formed using both an aliphatic compound and an aromatic compound as monomers. Examples of the aliphatic polyester include polyethylene succinate, polybutylene succinate (PBS), polyhexamethylene succinate, polyethylene adipate, polybutylene adipate, polyhexamethylene adipate, polybutylene succinate adipate (PBSA), polyethylene sebacate, and polybutylene sebacate. Examples of the aliphatic-aromatic polyester include poly(butylene adipate-co-butylene terephthalate) (PBAT), poly(butylene sebacate-co-butylene terephthalate), poly(butylene azelate-co-butylene terephthalate), and poly(butylene succinate-co-butylene terephthalate) (PBST). One of the other resins as mentioned above may be used alone, or two or more thereof may be used in combination.

The crosslinked resin particles (B) are preferably unfoamed resin particles unlike foamed resin particles as disclosed in WO 2007/049694 or WO 2019/146555. That is, the crosslinked resin particles (B) are preferably substantially free of internal bubbles.

When the crosslinked resin particles (B) are unfoamed particles, the crosslinked resin particles (B) have a relatively high apparent density. The apparent density is preferably more than 0.6 g/cm³, more preferably 0.7 g/cm³ or more, and even more preferably 0.9 g/cm³ or more. The apparent density of the crosslinked resin particles (B) can be determined by a method as described in JIS K 0061 (Test methods for density and relative density of chemical products) or a method as described in JIS Z 8807 (Methods of measuring density and specific gravity of solid).

The average weight per particle of the crosslinked resin particles (B) is not limited to a particular range. Since the crosslinked resin particles (B) are small-diameter particles having a volume mean diameter of 10 µm or less, the average weight per particle is much smaller than 0.1 mg.

The crosslinked resin particles (B) may be dry particles. The dry crosslinked resin particles (B) may take the form of powder particles, pellets, crumbs, or sheet-shaped particles depending on the drying method.

### <Method for Producing Crosslinked Resin Particles (B)>

One exemplary method for producing the crosslinked resin particles (B) will be described in detail. The crosslinked resin particles (B) can be produced by crosslinking a PHA in the presence of a peroxide in an aqueous dispersion containing particles of the uncrosslinked PHA. To efficiently crosslink the PHA, the aqueous PHA particle dispersion containing the peroxide is preferably heated to a temperature suitable for decomposition of the peroxide.

More specifically, the method for producing the crosslinked resin particles (B) preferably includes the steps of: (1) preparing an aqueous PHA particle dispersion containing uncrosslinked PHA particles dispersed in water; (2) adding a peroxide to the aqueous PHA particle dispersion to impregnate the PHA particles with the peroxide; and (3) heating the aqueous dispersion of the peroxide-impregnated PHA particles to a heating temperature to crosslink the PHA. More preferably, the method further includes the step (4) of maintaining the heating temperature after adding all of the peroxide.

In the step (1), the aqueous PHA particle dispersion may be an aqueous dispersion obtained by culturing a PHA-producing microorganism to accumulate a PHA in the microbial cells, then disrupting the microbial cells in the culture fluid, and separating and removing the cellular components. The aqueous dispersion thus obtained may be concentrated or diluted, and the concentrated or diluted dispersion may be used as the aqueous PHA particle dispersion. When the aqueous PHA particle dispersion is obtained in the above way, the procedures from the PHA particle preparation by culture of the PHA-producing microorganism to the crosslinking process can be carried out without separating the PHA particles from water.

Alternatively, the aqueous PHA particle dispersion can be prepared by dispersing dry PHA particles in water. The aqueous dispersion may contain, in addition to water, a water-miscible organic solvent.

In the aqueous dispersion, the volume mean diameter of the PHA particles is preferably in the same range as the volume mean diameter of the crosslinked resin particles (B) described above. When the PHA particles are those produced by a PHA-producing microorganism, the volume mean diameter of the PHA particles can be usually in the above-specified range; thus, an aqueous dispersion of PHA particles having a desired volume mean diameter can be obtained without the need for any special step for particle diameter adjustment.

The concentration of the PHA particles in the aqueous dispersion is not limited to a particular range and can be chosen as appropriate. The concentration of the PHA particles may be, for example, from about 1 to about 70 wt% and is preferably from about 5 to about 50 wt%.

The aqueous PHA particle dispersion preferably contains a dispersant to enhance the dispersibility of the PHA particles and allow the crosslinking reaction to take place uniformly. Examples of the dispersant include: anionic surfactants such as sodium dioctyl sulfosuccinate, sodium dodecyl sulfate, sodium lauryl sulfate, and sodium oleate; cationic surfactants such as lauryltrimethylammonium chloride; non-ionic surfactants such as glycerin fatty acid esters, sorbitan fatty acid esters, sucrose fatty acid esters, polyoxyethylene alkyl ethers, polyoxyethylene alkyl phenyl ethers, and polyoxyethylene polyoxypropylene glycol; and water-soluble polymers such as polyvinyl alcohol, ethylene-modified polyvinyl alcohol, polyvinylpyrrolidone, methylcellulose, ethylcellulose, hydroxymethylcellulose, hydroxyethylcellulose, polyacrylic acid, sodium polyacrylate, potassium polyacrylate, polymethacrylic acid, and sodium polymethacrylate. One of these dispersants may be used alone, or two or more thereof may be used in combination.

When a dispersant is used, the amount of the dispersant added is not limited to a particular range and may be, for example, from 0.1 to 10 parts by weight per 100 parts by weight of the PHA particles. The amount of the dispersant is preferably from 0.5 to 5 parts by weight per 100 parts by weight of the PHA particles.

In the step (2), a peroxide is added to the aqueous PHA particle dispersion obtained in the step (1) to impregnate the PHA particles with the peroxide. The peroxide used can be any of those mentioned above. The peroxide added may be in any form such as a solid or liquid. The peroxide added may be a liquid diluted with a diluent or the like. The peroxide may be added all at once or may be added continuously or in batches.

When the peroxide and the polyfunctional compound as described above are used in combination, the polyfunctional compound is preferably added to the aqueous PHA particle dispersion in the step (2). The polyfunctional compound used can be any of those mentioned above. The polyfunctional compound added may be in any form such as a solid or liquid. The polyfunctional compound added may be a liquid diluted with a diluent or the like. The polyfunctional compound may be added all at once or may be added continuously or in batches.

The impregnation of the PHA particles with the peroxide and the optionally-used polyfunctional compound may be accomplished as follows: after or concurrently with the addition of these compounds to the aqueous PHA particle dispersion, the temperature of the aqueous dispersion is set, for example, to a temperature that is 0°C or higher but is lower than the temperature employed in the next step (3) as a temperature suitable for decomposition of the peroxide, and such a temperature of the aqueous dispersion is maintained, for example, for about 1 minute to about 5 hours with stirring of the aqueous dispersion. To be specific, the temperature of the aqueous dispersion during the impregnation may be from about 10 to about 60°C.

The amount of the peroxide used can be chosen as appropriate in view of the gel fraction of the crosslinked resin particles (B). For example, the amount of the peroxide is preferably from 0.01 to 10 parts by weight, more preferably from 0.1 to 8 parts by weight, even more preferably from 0.3 to 5 parts by weight, and particularly preferably from 0.5 to 3 parts by weight per 100 parts by weight of the PHA particles.

With the production method in which PHA particles are crosslinked using a peroxide in an aqueous dispersion of the PHA particles, it is easy to obtain crosslinked resin particles by allowing the crosslinking to proceed while keeping the particle diameter (volume) the same as before the crosslinking. This could be difficult to achieve by a method in which a resin is crosslinked by melting and kneading it in the presence of a peroxide.

The production method in which PHA particles are crosslinked using a peroxide in an aqueous dispersion of the PHA particles is also advantageous in that the temperature increase due to heat generated during the crosslinking reaction can be easily controlled and that crosslinked resin particles having a safe and stable crosslinked structure (quality) can be efficiently obtained.

The amount of the polyfunctional compound used may also be chosen as appropriate in view of the gel fraction of the crosslinked resin particles (B). For example, the amount of the polyfunctional compound is preferably from 0.01 to 20 parts by weight, more preferably from 0.05 to 15 parts by weight, even more preferably from 0.1 to 10 parts by weight, still even more preferably from 0.2 to 5 parts by weight, and particularly preferably from 0.3 to 3 parts by weight per 100 parts by weight of the PHA particles.

In the step (3), the aqueous dispersion of the peroxide-impregnated PHA particles is heated to a temperature suitable for decomposition of the peroxide. The heating temperature preferably ranges from a temperature about 25°C below the above-described one-hour half-life temperature of the peroxide to a temperature about 25°C above the one-hour half-life temperature of the peroxide. To be specific, the heating temperature is preferably from 30 to 140°C, more preferably from 50 to 135°C, and even more preferably from 60 to 130°C. With this method, the PHA can be crosslinked at a temperature lower than the melting temperature of the PHA and thus can avoid deterioration caused by heating in the crosslinking process.

In the subsequent step (4), it is preferable to maintain the above heating temperature. This allows for satisfactory completion of the peroxide-mediated crosslinking reaction. The time for which the heating temperature is maintained is not limited to a particular range but is preferably from 1 minute to 15 hours and more preferably from 1 to 10 hours.

After the end of the crosslinking reaction, the crosslinked resin particles (B) are separated from the aqueous dispersion and dehydrated. Thus, the crosslinked resin particles (B) can be obtained as dry particles. The separation of the crosslinked resin particles (B) is not limited to using a particular method and can be accomplished, for example, using filtration, centrifugation, heat drying, freeze drying, or spray drying. For example, with the use of spray drying, the dry crosslinked resin particles (B) can be obtained directly from the aqueous dispersion. After separation from the aqueous dispersion, the crosslinked resin particles (B) may be subjected alone to an extrusion process; in this case, the dry crosslinked resin particles (B) can be obtained as pellets along with complete removal of residual water. An aggregation step using a coagulant or pH adjustment may be carried out.

In the thermoplastic resin composition according to the present embodiment, the amount of the crosslinked resin particles (B) is from 0.1 to 20 parts by weight per 100 parts by weight of the total amount of the thermoplastic resin (A) and the crosslinked resin particles (B). When the amount of the crosslinked resin particles (B) used is in the above range, solidification of the thermoplastic resin composition can be accelerated to increase the productivity in melt processing. The amount of the crosslinked resin particles (B) is preferably 0.3 parts by weight or more, more preferably 0.5 parts by weight or more, and particularly preferably 1 part by weight or more. The amount of the crosslinked resin particles (B) is preferably up to 15 parts by weight, more preferably up to 12 parts by weight, and particularly preferably up to 10 parts by weight.

### <Thermoplastic Resin (A)>

In the thermoplastic resin composition according to the present embodiment, the thermoplastic resin (A) serving as a matrix resin is not limited to a particular type and may be any resin that can be molded into a desired shape by heating and melting followed by cooling and solidification. Specific examples of the thermoplastic resin (A) include: polyolefin resins such as polyethylene and polypropylene; acrylic resins such as polyvinyl chloride, polystyrene, polyvinyl acetate, polyurethane, polytetrafluoroethylene, and poly(methyl methacrylate); AS resins; polyamides; polyacetals; polycarbonates; modified polyphenylene ethers; polyester resins; and cyclic polyolefins. One of these thermoplastic resins may be used alone, or two or more thereof may be used in combination.

The thermoplastic resin (A) is particularly preferably a polyester resin. Examples of the polyester resin include: PHAs as described above; aliphatic polyesters such as a polyester having a structure resulting from polycondensation of an aliphatic diol and an aliphatic dicarboxylic acid; and aliphatic-aromatic polyesters formed using both an aliphatic compound and an aromatic compound as monomers. Examples of the aliphatic polyesters other than PHAs include polycaprolactone, polyethylene succinate, polybutylene succinate (PBS), polyhexamethylene succinate, polyethylene adipate, polybutylene adipate, polyhexamethylene adipate, polybutylene succinate adipate (PBSA), polyethylene sebacate, and polybutylene sebacate. Examples of the aliphatic-aromatic polyesters include poly(butylene adipate-co-butylene terephthalate) (PBAT), poly(butylene sebacate-co-butylene terephthalate), poly(butylene azelate-co-butylene terephthalate), and poly(butylene succinate-co-butylene terephthalate) (PBST). One of these polyester resins may be used alone, or two or more thereof may be used in combination.

Since the crosslinked resin particles (B) are made with a PHA having biodegradability, the thermoplastic resin (A) preferably also contains a biodegradable resin. In this case, the biodegradability of the thermoplastic resin composition as a whole can be enhanced.

When the crosslinked resin particles (B) are those produced from a plant-derived raw material, it is preferable, in terms of resources recycling, that the thermoplastic resin (A) be also a resin produced from a plant-derived raw material.

When the thermoplastic resin (A) contains a biodegradable resin, the content of the biodegradable resin in the total thermoplastic resin (A) is preferably from 10 to 100 wt%, more preferably 30 wt% or more, even more preferably 50 wt% or more, still even more preferably 70 wt% or more, and particularly preferably 90 wt% or more.

The biodegradable resin used as the thermoplastic resin (A) preferably includes the aliphatic polyester as described above and particularly preferably includes a PHA because in such a case the solidification-accelerating effect provided by the crosslinked resin particles (B) is enhanced. The PHA used as the thermoplastic resin (A) preferably has no crosslinked structure.

When the thermoplastic resin (A) contains a PHA, the content of the PHA in the total thermoplastic resin (A) is preferably from 10 to 100 wt%, more preferably 30 wt% or more, even more preferably 50 wt% or more, still even more preferably 70 wt% or more, and particularly preferably 90 wt% or more.

Examples of PHAs that can be used as the thermoplastic resin (A) include, but are not limited to, polyglycolic acid, P3HAs, and poly(4-hydroxyalkanoate) resins. One PHA may be used alone, or two or more PHAs may be used in combination. P3HAs are particularly preferred.

P3HAs that can be used as the thermoplastic resin (A) include those that can be used for the crosslinked resin particles (B), and any of the various P3HAs as previously mentioned can be used as the thermoplastic resin (A). The P3HA used as the thermoplastic resin (A) and the P3HA used for the crosslinked resin particles (B) may be the same or different.

When the P3HA used as the thermoplastic resin (A) contains 3-hydroxybutylic acid (3HB) repeating units, it is preferable, in terms of the balance between flexibility and strength, that the proportion of the 3HB repeating units be from 80 to 99 mol% and more preferably from 82 to 97 mol% in total monomer repeating units (100 mol%). When the proportion of the 3HB repeating units is 80 mol% or more, the stiffness of the P3HA can be enhanced. When the proportion of the 3HB repeating units is 99 mol% or less, the flexibility of the P3HA is likely to be enhanced. Two or more P3HAs differing in the proportion of the 3HB repeating units may be used in combination.

The molecular weight of the PHA used as the thermoplastic resin (A) is not limited to a particular range. The weight-average molecular weight of the PHA is preferably from 50,000 to 3,000,000, more preferably from 100,000 to 2,000,000, and even more preferably from 150,000 to 1,500,000. When the weight-average molecular weight is 50,000 or more, the thermoplastic resin composition according to the present embodiment can exhibit satisfactory stiffness or strength. The PHA having a weight-average molecular weight of more than 3,000,000 could be difficult to produce or to handle for the purpose of the present invention.

### <Nucleating Agent>

The thermoplastic resin composition may further contain a nucleating agent. When the thermoplastic resin (A) is a crystalline resin, the inclusion of the nucleating agent in the thermoplastic resin composition can lead to further acceleration of crystallization in a molding process, offering further improvements in moldability, productivity, etc. Furthermore, the thermoplastic resin composition can be obtained as one that has excellent heat resistance or mechanical properties.

The nucleating agent used is not limited to a particular type and can be a conventionally known nucleating agent. Examples include: inorganic substances such as talc, kaolinite, montmorillonite, mica, synthetic mica, clay, zeolite, silica, carbon black, graphite, boron nitride, zinc oxide, titanium oxide, tin oxide, calcium carbonate, magnesium carbonate, aluminum oxide, neodymium oxide, barium sulfate, sodium chloride, and metal phosphates; naturally occurring sugar alcohol compounds such as erythritol, pentaerythritol, galactitol, mannitol, and arabitol; polysaccharides such as chitin and chitosan; polyols such as aliphatic alcohols (polyols), polyvinyl alcohol, and polyethylene oxide; organic carboxylic acid metal salts such as sodium benzoate, potassium benzoate, lithium benzoate, calcium benzoate, magnesium benzoate, barium benzoate, lithium terephthalate, sodium terephthalate, potassium terephthalate, calcium oxalate, sodium laurate, potassium laurate, sodium myristate, potassium myristate, calcium myristate, sodium octacosanoate, calcium octacosanoate, sodium stearate, potassium stearate, lithium stearate, calcium stearate, magnesium stearate, barium stearate, sodium montanate, calcium montanate, sodium toluate, sodium salicylate, potassium salicylate, zinc salicylate, aluminum dibenzoate, potassium dibenzoate, lithium dibenzoate, sodium β-naphthalate, and sodium cyclohexanecarboxylate; organic sulfonic acid salts such as sodium *p*-toluenesulfonate and sodium sulfoisophthalate; carboxylic amides such as ethylene stearamide, ethylene bislauramide, palmitamide, hydroxystearamide, erucamide, and trimesic acid tris(z-butylamide); carboxylic esters such as lauric esters, palmitic esters, oleic esters, stearic esters, erucic esters, *N*-oleylpalmitic esters, *N*-oleyloleic esters, *N*-oleylstearic esters, *N*-stearyloleic esters, *N*-stearylstearic esters, *N*-stearylerucic esters, methylene bisstearic esters, ethylene bislauric esters, ethylene biscapric esters, ethylene bisoleic esters, ethylene bisstearic esters, ethylene biserucic esters, ethylene bisisostearic esters, butylene bisstearic esters, and *p*-xylylene bisstearic esters; dicarboxylic derivatives such as dimethyl adipate, dibutyl adipate, diisodecyl adipate, and dibutyl sebacate; cyclic compounds such as indigo, quinacridone, and quinacridone magenta which have in their molecule a functional group C=O and another functional group selected from NH, S, and O; sorbitol derivatives such as bis(benzylidene) sorbitol and bis(*p*-methylbenzylidene) sorbitol; compounds such as pyridine, triazine, and imidazole which contain a nitrogen-containing heteroaromatic core; phosphoric ester compounds; bisamides of higher fatty acids; metal salts of higher fatty acids; branched polylactic acid; and low-molecular-weight poly-3-hydroxybutyrate. One of these nucleating agents may be used alone, or two or more thereof may be used in combination.

The amount of the nucleating agent is not limited to a particular range and may be any value as long as the nucleating agent can accelerate crystallization of the thermoplastic resin (A). The amount of the nucleating agent is preferably from 0.05 to 12 parts by weight, more preferably from 0.1 to 10 parts by weight, and even more preferably from 0.5 to 8 parts by weight per 100 parts by weight of the thermoplastic resin (A). When the amount of the nucleating agent is in the above range, the effect of the nucleating agent can be obtained while minimizing a reduction in the viscosity during a molding process or in physical properties of the resulting molded article.

### <Lubricant>

The thermoplastic resin composition may further contain a lubricant. The inclusion of the lubricant can improve the surface smoothness of the resulting molded article. Examples of the lubricant include, but are not limited to: fatty acid metal salts such as magnesium stearate and calcium stearate; fatty acid amides such as behenamide, stearamide, erucamide, oleamide, methylene bis(stearamide), and ethylene bis(stearamide); glycerin monofatty acid esters such as polyethylene wax, oxidized polyester wax, glycerin monostearate, glycerin monobehenate, and glycerin monolaurate; organic acid monoglycerides such as succinylated monoglycerides of saturated fatty acids; sorbitan fatty acid esters such as sorbitan behenate, sorbitan stearate, and sorbitan laurate; polyglycerin fatty acid esters such as diglycerin stearate, diglycerin laurate, tetraglycerin stearate, tetraglycerin laurate, decaglycerin stearate, and decaglycerin laurate; and higher alcohol fatty acid esters such as stearyl stearate. One lubricant may be used alone, or two or more lubricants may be used in combination.

The amount of the lubricant (when two or more lubricants are used, the total amount of the lubricants) is not limited to a particular range and may be any value as long as the lubricant(s) can impart lubricity to the molded article. The (total) amount of the lubricant(s) is preferably from 0.01 to 20 parts by weight, more preferably from 0.05 to 10 parts by weight, even more preferably from 0.1 to 10 parts by weight, still even more preferably from 0.2 to 5 parts by weight, and particularly preferably from 0.3 to 4 parts by weight per 100 parts by weight of the thermoplastic resin (A). When the (total) amount of the lubricant(s) is in the above range, the effect of the lubricant(s) can be obtained while avoiding bleeding out of the lubricant(s) to the surface of the molded article.

### <Other Components>

The thermoplastic resin composition according to the present embodiment can contain other components to the extent that the other components do not impair the function of the resulting molded article. Examples of the other components include a plasticizer, an organic filler, an inorganic filler, an antioxidant, a hydrolysis inhibitor, an ultraviolet absorber, a colorant such as a dye or pigment, and an antistatic agent.

Examples of the plasticizer include, but are not limited to: polyester plasticizers such as polypropylene glycol sebacate; aliphatic dibasic ester plasticizers such as di-1-butyl adipate, di-*n*-butyl sebacate, and di-2-ethylhexyl azelate; glycerin plasticizers such as glycerin diacetomonolaurate, glycerin diacetomonocaprylate, and glycerin diacetomonodecanoate; polycarboxylic ester plasticizers such as tri-2-ethylhexyl acetylcitrate and tributyl acetylcitrate; polyalkylene glycol plasticizers such as polyethylene glycol, polypropylene glycol, poly(ethylene oxide-propylene oxide) block and/or random copolymer, and polytetramethylene glycol; phosphoric ester plasticizers such as diphenyl-2-ethylhexyl phosphate and diphenyl octyl phosphate; epoxy plasticizers such as epoxidized soybean oil and epoxidized linseed oil fatty acid butyl ester; and castor oil plasticizers such as castor oil fatty acid ester, methyl ricinoleate, ethyl ricinoleate, isopropyl ricinoleate, butyl ricinoleate, ethylene glycol monoricinoleate, propylene glycol monoricinoleate, trimethylolpropane monoricinoleate, sorbitan monoricinoleate, castor oil fatty acid polyethylene glycol ester, castor oil ethylene oxide adduct, castor oil polyol, castor oil triol, and castor oil diol. One of these plasticizers may be used alone, or two or more thereof may be used in combination.

Examples of the organic filler include, but are not limited to: fillers composed of naturally occurring materials, including woody materials such as wood debris, wood powder, and sawdust, rice chaff, rice powder, starch, corn starch, rice straw, wheat straw, and natural rubber; organic fibers such as plant-derived natural fibers, animal-derived natural fibers, and synthetic fibers; and fillers composed of synthetic resin materials such as polyester, polyacrylic, polyamide, nylon, polyethylene, polyolefin, polyvinyl alcohol, polyvinyl chloride, polyurethane, polyacetal, aramid, PBO (poly-*p*-phenylene benzobisoxazole), polyphenylene sulfide, acetylcellulose, polybenzazole, polyarylate, polyvinyl acetate, and synthetic rubber.

Examples of the plant-derived natural fibers include kenaf fiber, abaca fiber, bamboo fiber, jute fiber, hemp fiber, linen fiber, henequen (sisal hemp), ramie fiber, hemp, cotton, banana fiber, coconut fiber, palm, kozo (paper mulberry), mitsumata, and bagasse. Other examples include: pulp and cellulose fiber processed from plant fiber; and recycled fibers such as rayon. Examples of the animal-derived natural fibers include sheep wool, silk, cashmere, and mohair.

Examples of the inorganic filler include, but are not limited to: inorganic silica fillers such as quartz, fumed silica, silicic anhydride, molten silica, crystalline silica, amorphous silica, a filler resulting from condensation of an alkoxysilane, and ultrafine amorphous silica; and other inorganic fillers such as alumina, zircon, iron oxide, zinc oxide, titanium oxide, silicon nitride, boron nitride, aluminum nitride, silicon carbide, glass, silicone rubber, silicone resin, titanium oxide, carbon fiber, mica, black lead, carbon black, ferrite, graphite, diatomite, white clay, clay, talc, calcium carbonate, manganese carbonate, magnesium carbonate, barium sulfate, and silver powder. These inorganic fillers may be surface-treated to increase their dispersibility in the resin composition. One of these inorganic fillers may be used alone, or two or more thereof may be used in combination.

Examples of the antioxidant include, but are not limited to, phenol antioxidants, phosphorus antioxidants, and sulfur antioxidants. One of these antioxidants may be used alone, or two or more thereof may be used in combination.

Examples of the hydrolysis inhibitor include, but are not limited to, carbodiimide compounds, epoxy compounds, isocyanate compounds, and oxazoline compounds. One of these hydrolysis inhibitors may be used alone, or two or more thereof may be used in combination.

Examples of the ultraviolet absorber include, but are not limited to, benzophenone compounds, benzotriazole compounds, triazine compounds, salicylic acid compounds, cyanoacrylate compounds, and nickel complex salt compounds. One of these ultraviolet absorbers may be used alone, or two or more thereof may be used in combination.

Examples of the colorant such as a pigment or dye include, but are not limited to: inorganic colorants such as titanium oxide, calcium carbonate, chromium oxide, copper suboxide, calcium silicate, iron oxide, carbon black, graphite, titanium yellow, and cobalt blue; soluble azo pigments such as lake red, lithol red, and brilliant carmine; insoluble azo pigments such as dinitroaniline orange and fast yellow; phthalocyanine pigments such as monochlorophthalocyanine blue, polychlorophthalocyanine blue, and polybromophthalocyanine green; condensed polycyclic pigments such as indigo blue, perylene red, isoindolinone yellow, and quinacridone red; and dyes such as Oracet yellow. One of these colorants may be used alone, or two or more thereof may be used in combination.

Examples of the antistatic agent include, but are not limited to: low-molecular-weight antistatic agents such as fatty acid ester compounds, aliphatic ethanolamine compounds, and aliphatic ethanolamide compounds; and high-molecular-weight antistatic agents. One of these antistatic agents may be used alone, or two or more thereof may be used in combination.

The thermoplastic resin composition according to the present embodiment may further contain: a catalyst deactivator such as a hindered phenol compound, a thioether compound, a vitamin compound, a triazole compound, a polyamine compound, a hydrazine derivative compound, or a phosphorus compound; a mold release such as montanic acid, a salt of montanic acid, an ester of montanic acid, a half ester of montanic acid, stearyl alcohol, stearamide, or polyethylene wax; an anti-coloring agent such as a phosphorus acid salt or a hypophosphorous acid salt; a silane coupling agent such as an epoxysilane coupling agent, an aminosilane coupling agent, a (meth)acrylic silane coupling agent, or an isocyanatosilane coupling agent; a flame retardant such as red phosphorus, a phosphoric ester, brominated polystyrene, brominated polyphenylene ether, brominated polycarbonate, aluminum hydroxide, magnesium hydroxide, melamine, cyanuric acid, a salt of cyanuric acid, or a silicon compound; a conductive additive such as carbon black; a slidability improver such as graphite or a fluororesin; an epoxy compound such as a glycidyl ether compound, a glycidyl ester compound, or a polymer compound resulting from grafting or copolymerization of a glycidyl compound; an acid anhydride compound such as maleic anhydride, succinic anhydride, or a polymer compound resulting from grafting or copolymerization of an acid anhydride; and a carbodiimide compound such as *N*,*N'*-di-2,6-diisopropylphenylcarbodiimide, 2,6,2',6'-tetraisopropyldiphenylcarbodiimide, or polycarbodiimide.

The amount of each of the other components described above is not limited to a particular range and may be any value as long as the effect of the invention can be achieved. The amount of each of the other components can be chosen as appropriate by those skilled in the art.

### [Method for Producing Thermoplastic Resin Composition]

The thermoplastic resin composition according to the present embodiment can be produced by a known method. A specific example is a method in which the thermoplastic resin (A) and the crosslinked resin particles (B) are melted and kneaded, optionally together with a nucleating agent, a lubricant, and other components, by using a device such as an extruder, a kneader, a Banbury mixer, or a roll mill. In the melting and kneading, the components are preferably mixed with care so as to avoid a reduction in molecular weight caused by thermal decomposition. Alternatively, the thermoplastic resin composition can be produced by dissolving the components in a solvent and then removing the solvent.

In the production by melting and kneading, each of the components may be individually placed into a device such as an extruder, or the components may be mixed first and then the mixture may be placed into a device such as an extruder. For example, an aqueous dispersion of the thermoplastic resin (A) and an aqueous dispersion of the crosslinked resin particles (B) may be mixed, then the mixture may be dried to obtain a powder mixture, and the powder mixture may be placed into a device such as an extruder.

When the melting and kneading are performed by an extruder, the resulting thermoplastic resin composition may be extruded into a strand, and then the strand may be cut into particles of bar shape, cylindrical shape, elliptic cylindrical shape, spherical shape, cubic shape, rectangular parallelepiped shape, or any other shape.

The resin temperature in the melting and kneading depends on the properties such as melting point and melt viscosity of the resins used and cannot be definitely specified. In terms of avoiding thermal decomposition of the thermoplastic resin (A) and at the same time dispersing the crosslinked resin particles (B) uniformly, the resin temperature is preferably from 140 to 220°C, more preferably from 150 to 210°C, and even more preferably from 160 to 200°C.

### <Method for Producing Molded Article>

A molded article can be produced from the thermoplastic resin composition according to the present embodiment. The production is not limited to using a particular molding method, and a commonly used molding method can be employed. Specific examples of the molding method include blown film molding, extrusion blow molding, injection blow molding, extrusion molding, calender molding, vacuum molding, and injection molding.

According to the present embodiment, resin solidification is accelerated in any of the above molding methods, so that a sheet, a film, a blow-molded article, an extrusion-molded article, a vacuum-molded article, or an injection-molded article can be produced at high productivity.

The molded article made with the thermoplastic resin composition according to the present embodiment is suitable for use in various fields such as agricultural industry, fishery industry, forestry industry, horticultural industry, medical industry, hygiene industry, food industry, apparel industry, non-apparel industry, packaging industry, automotive industry, building material industry, and other industries.

In the following items, preferred aspects of the present disclosure are listed. The present invention is not limited to the following items.

### [Item 1]

A thermoplastic resin composition containing:
80 to 99.9 parts by weight of a thermoplastic resin (A); and
0.1 to 20 parts by weight of crosslinked resin particles (B) containing a polyhydroxyalkanoate resin and having a gel fraction of 50% or more, wherein a total amount of the thermoplastic resin (A) and the crosslinked resin particles (B) is 100 parts by weight.

### [Item 2]

The thermoplastic resin composition according to item 1, wherein the polyhydroxyalkanoate resin is a poly(3-hydroxyalkanoate) resin.

### [Item 3]

The thermoplastic resin composition according to item 1 or 2, wherein the crosslinked resin particles (B) have a volume mean diameter of 0.1 to 10 µm.

### [Item 4]

The thermoplastic resin composition according to any one of items 1 to 3, wherein the crosslinked resin particles (B) are particles crosslinked using a peroxide.

### [Item 5]

The thermoplastic resin composition according to any one of items 1 to 4, wherein the crosslinked resin particles (B) are particles crosslinked in the presence of a polyfunctional compound.

### [Item 6]

The thermoplastic resin composition according to any one of items 1 to 5, wherein the crosslinked resin particles (B) are unfoamed particles.

### [Item 7]

The thermoplastic resin composition according to any one of items 1 to 6, wherein a proportion of the polyhydroxyalkanoate resin in the crosslinked resin particles (B) is 80 wt% or more.

### [Item 8]

The thermoplastic resin composition according to any one of items 1 to 7, wherein the thermoplastic resin (A) includes a biodegradable resin.

### [Item 9]

The thermoplastic resin composition according to item 8, wherein the biodegradable resin is a polyhydroxyalkanoate resin.

### [Item 10]

The thermoplastic resin composition according to any one of items 1 to 9, further containing a nucleating agent and/or a lubricant.

### [Item 11]

A molded article containing the thermoplastic resin composition according to any one of items 1 to 10.

### [Item 12]

The molded article according to item 11, wherein the molded article is a sheet, a film, a blow-molded article, an extrusion-molded article, a vacuum-molded article, or an injection-molded article.

### [Item 13]

A solidification accelerator for thermoplastic resins, the solidification accelerator containing crosslinked resin particles (B) containing a polyhydroxyalkanoate resin and having a gel fraction of 50% or more.

### Examples

Hereinafter, the present invention will be described more specifically using examples. The present invention is not limited by the examples in any respect.

### [1] Measurement Conditions

### 1-1. Weight-average molecular weight

The resin as a measurement object was dissolved in chloroform, and the solution was heated in a hot water bath at 60°C for 30 minutes. The heated solution was passed through a disposable filter made of PTFE and having a pore diameter of 0.45 µm, and the filtrate was then subjected to GPC analysis under the conditions listed below to determine the weight-average molecular weight.
GPC system: High-performance liquid chromatograph 20A system manufactured by Shimadzu Corporation
Columns: K-G 4A (one column) and K-806M (two columns) manufactured by Showa Denko K.K.
Sample concentration: 1 mg/ml
Eluent: Chloroform solution
Eluent flow rate: 1.0 ml/min
Amount of injected sample: 100 µL
Analysis time: 30 minutes
Standard sample: Standard polystyrene

### 1-2. Volume mean diameter

The volume mean diameter of the crosslinked resin particles or uncrosslinked resin particles was measured for a latex of the resin particles. The measurement device used was Microtrac MT3300 EXII manufactured by Nikkiso Co., Ltd.

### 1-3. Gel fraction

The crosslinked resin particles or uncrosslinked resin particles which were dried were added to chloroform to give a concentration of 0.7 wt% and dissolved at 60°C for 30 minutes to obtain a chloroform solution. Subsequently, the chloroform solution was allowed to stand at room temperature for 3 hours, after which the chloroform solution was filtered through a membrane filter having a pore diameter of 0.45 µm. During the filtration process, chloroform was poured on the interior of the container and the filter several times to ensure sufficient washing to prevent a loss. The gel remaining on the filter was dried, and the total weight of the dried gel and the filter was measured. The gel fraction was calculated by the following equation. Gel fraction = (weight of filter carrying dried gel - weight of filter alone)/weight of crosslinked resin particles or uncrosslinked resin particles used for measurement × 100 (%)

### [2] Raw Materials for Crosslinked Resin Particles

### 2-1. Uncrosslinked resin particles

Poly(3 -hydroxybutyrate-co-3 -hydroxyhexanoate): (3-hydroxybutyrate)/(3-hydroxyhexanoate) = 72/28 (mol/mol), weight-average molecular weight Mw = 70 × 10⁴ to 150 × 10⁴

### 2-2. Peroxide

t-Butyl peroxypivalate ("Luperox 11" manufactured by ARKEMA Yoshitomi Ltd., one-hour half-life temperature = 76°C)

### 2-3. Polyfunctional compound

### Allyl methacrylate

### [3] Method for Producing Crosslinked Resin Particles

An autoclave equipped with a stirrer, a baffle, a nitrogen inlet/outlet, and a thermometer was charged with an aqueous dispersion containing the uncrosslinked resin particles dispersed in water (the amount of solids was 100 parts by weight), 200 parts by weight of deionized water, 2 parts by weight of peroxide, 2 parts by weight of sodium dioctyl sulfosuccinate, and 5 parts by weight of polyfunctional compound. Stirring of the contents of the autoclave was started at room temperature, and at the same time the interior of the autoclave was purged with nitrogen.

After that, the contents of the autoclave were stirred at room temperature for 1 hour to impregnate the uncrosslinked resin particles with the peroxide and the polyfunctional compound. The impregnation was followed by heating to 94°C. After the temperature of 94°C was reached, the reaction was allowed to proceed at this temperature for 1 hour to obtain an aqueous dispersion containing crosslinked resin particles dispersed in water.

The pH of the aqueous dispersion was adjusted, and then the aqueous dispersion was dried in an oven to obtain the crosslinked resin particles solidified.

The volume mean diameter and the gel fraction of the obtained crosslinked resin particles were measured by the methods described above. The volume mean diameter was 1.7 µm and the gel fraction was 74.7%.

The volume mean diameter and the gel fraction of the uncrosslinked resin particles not subjected to the crosslinking reaction were also measured by the methods described above. The volume mean diameter was 1.7 µm and the gel fraction was 0%. The uncrosslinked resin particles were used in Comparative Example 2.

### [4] Evaluation by Differential Scanning Calorimetry

### 4-1. Components of test specimen

(a) Thermoplastic resin (A): The amount (parts by weight) is shown in the table. Poly(3-hydroxybutyrate-co-3-hydroxyhexanoate) (Kaneka Biodegradable Polymer PHBH^{™} manufactured by Kaneka Corporation), (3-hydroxybutyrate)/(3-hydroxyhexanoate) = 94.4/5.6 (mol/mol), weight-average molecular weight Mw = 53 × 10⁴
(b) Crosslinked resin particles (B) or uncrosslinked resin particles: The amount (parts by weight) is shown in the table.
(c) Pentaerythritol (Neulizer P manufactured by Nippon Synthetic Chemical Industry Co., Ltd.): 1 part by weight
(d) Behenamide (BNT 22H manufactured by Nippon Fine Chemical Co., Ltd.): 0.5 parts by weight

### 4-2. Method for preparing kneaded product for evaluation

A mixture of the components (a), (b), (c), and (d) was placed into a small-sized twin-screw kneader (Xplore MC5 manufactured by DSM) whose barrel temperature was raised to 175°C, and the mixture was kneaded at a screw rotational speed of 100 rpm for 180 seconds to obtain a kneaded product. The kneaded product was dried in a dryer at 80°C for 4 hours to fully reduce the moisture content of the kneaded product. The resulting kneaded product was used for the evaluation described below.

### 4-3. Evaluation method

An aluminum pan was charged with 2 to 3 mg of the resin kneaded product obtained as described above, and the resin kneaded product was subjected to analysis using a differential scanning calorimeter. In this calorimetry, the resin kneaded product was completely melted by heating from -40 to 180°C at a rate of 10°C/min under a nitrogen stream, and the complete melting was followed by cooling from 180 to -40°C at a rate of 10°C/min. For an exothermic peak obtained during the cooling from 180 to -40°C, the top temperature at which the exothermic energy reached a maximum was determined as a Tmc, and the temperature at which the exothermic process started was determined as a Tmc starting point. The results are listed in the table below.

**[Table 1]**

| | | Comp. 1 | Comp. 2 | Ex. 1 | Ex. 2 | Ex. 3 | Ex. 4 |
|---|---|---|---|---|---|---|---|
| Component proportions (parts by weight) | Thermoplastic resin (A) | 100 | 90 | 99 | 97 | 95 | 90 |
| | Uncrosslinked resin particles | | 10 | | | | |
| | Crosslinked resin particles (B) | | | 1 | 3 | 5 | 10 |
| | Pentaerythritol | 1 | 1 | 1 | 1 | 1 | 1 |
| | Behenamide | 0.5 | 0.5 | 0.5 | 0.5 | 0.5 | 0.5 |
| Results of DSC | Tmc (°C) | 92.7 | 96.4 | 96.4 | 96.9 | 100.3 | 100.6 |
| | Tmc starting point (°C) | 115.5 | 114 1 | 117.3 | 120.1 | 125.7 | 126.4 |

It is seen from Table 1 that the Tmc starting point and the Tmc were higher in Examples 1 to 4 than in Comparative Example 1. This demonstrates that in Examples 1 to 4, the post-melting solidification proceeded at a relatively high temperature and therefore that the crosslinked resin particles have a solidification-accelerating effect.

Comparison of Example 4 and Comparative Example 2, in which the amount of the resin particles was equal to that in Example 4 but the resin particles were uncrosslinked resin particles having a low gel fraction, reveals that the Tmc and the Tmc starting point were higher in Example 4 than in Comparative Example 2. This demonstrates that the crosslinked resin particles have a higher level of solidification-accelerating effect than the uncrosslinked resin particles.

Comparison of Example 1 and Comparative Example 2 reveals that the Tmc in Example 1 was equal to that in Comparative Example 2 and the Tmc starting point was higher in Example 1 than in Comparative Example 2, despite the fact that the amount of the resin particles in Example 1 was as small as 1/10 of that in Comparative Example 2. This also proves that the crosslinked resin particles have a higher level of solidification-accelerating effect than the uncrosslinked resin particles.

## Claims

1. A thermoplastic resin composition comprising:
80 to 99.9 parts by weight of a thermoplastic resin (A); and
0.1 to 20 parts by weight of crosslinked resin particles (B) comprising a polyhydroxyalkanoate resin and having a gel fraction of 50% or more, wherein a total amount of the thermoplastic resin (A) and the crosslinked resin particles (B) is 100 parts by weight.

2. The thermoplastic resin composition according to claim 1, wherein the polyhydroxyalkanoate resin is a poly(3-hydroxyalkanoate) resin.

3. The thermoplastic resin composition according to claim 1 or 2, wherein the crosslinked resin particles (B) have a volume mean diameter of 0.1 to 10 µm.

4. The thermoplastic resin composition according to claim 1 or 2, wherein the crosslinked resin particles (B) are particles crosslinked using a peroxide.

5. The thermoplastic resin composition according to claim 4, wherein the crosslinked resin particles (B) are particles crosslinked in the presence of a polyfunctional compound.

6. The thermoplastic resin composition according to claim 1 or 2, wherein the crosslinked resin particles (B) are unfoamed particles.

7. The thermoplastic resin composition according to claim 1 or 2, wherein a proportion of the polyhydroxyalkanoate resin in the crosslinked resin particles (B) is 80 wt% or more.

8. The thermoplastic resin composition according to claim 1 or 2, wherein the thermoplastic resin (A) comprises a biodegradable resin.

9. The thermoplastic resin composition according to claim 8, wherein the biodegradable resin is a polyhydroxyalkanoate resin.

10. The thermoplastic resin composition according to claim 1 or 2, further comprising a nucleating agent and/or a lubricant.

11. A molded article comprising the thermoplastic resin composition according to claim 1 or 2.

12. The molded article according to claim 11, wherein the molded article is a sheet, a film, a blow-molded article, an extrusion-molded article, a vacuum-molded article, or an injection-molded article.

13. A solidification accelerator for thermoplastic resins, the solidification accelerator comprising crosslinked resin particles (B) comprising a polyhydroxyalkanoate resin and having a gel fraction of 50% or more.
